# EUROPEAN PATENT SPECIFICATION

(11) **EP 3 724 033 B1**
(45) Date of publication and mention of the grant of the patent: **09.03.2022**
(21) Application number: 19855339.8
(22) Date of filing: 08.07.2019
(51) Int. Cl.: B60R 9/04, B60R 9/058

(54) **A LOAD CARRIER ROOF BAR FOR VEHICLES**
LASTENTRÄGERDACHSTREBE FÜR FAHRZEUGE
BARRE DE TOIT DE SUPPORT DE CHARGE POUR VÉHICULES

(30) Priority: 29.08.2018 TR 201812331
(43) Date of publication of application: 21.10.2020
(73) Proprietor: CAN OTOMOTIV INSAAT ITHALAT IHRACAT SANAYI VE TICARET LIMITED SIRKETI, Esenyurt/Istanbul (TR)
(72) Inventor: CAN, Muhammet, Istanbul (TR)
(86) International application number: PCT/TR2019/050540
(87) International publication number: WO 2020/046250

(56) References cited:
- EP-A1- 2 216 205
- WO-A1-97/48574
- WO-A1-2018/005944
- CN-A- 108 128 255
- DE-A1-102016 217 111
- US-A1- 2004 118 886
- US-A1- 2015 151 686

## Description

### Technical Field

The invention is related to load carrier roof bars configured on vehicle roofs in order to allow placing extended or unusually shaped items, whose volumetric structures do not comply with the trunk, when the vehicle trunk is insufficient.

### Prior Art

As already known, load carrier roof bars are fixed over the vehicle roof as a carrier and resilient structure. In cases where the vehicle trunk is insufficient, or extended or unusually shaped items, whose volumetric structures do not comply with the trunk, are placed over the roof area of the vehicle. On the other hand, roof bars are used in order to distribute this load to the carrier framework structure of the vehicle and to ensure that the roof is not destroyed due to the load.

Hence, fixing the roof bars which are fixed on the vehicle roof surface is of great importance. The roof bars used in the state of the art have a multi-pieced structure which require long assembly time.

In a patent research conducted in relation to the prior art, a patent numbered EP0635397A1 was found. This application proposes a roof bar that is fixed over the vehicle roof. It comprises two rails fixed to the roof and at least two cross pieces. The two cross-pieces locked on it contain opposite faces that can be applied directly to each other to form an aerofoil.

In the application no. DE4315029A1; a roof rail for motor vehicles comprises a profile cross carrier, which is supported by means of carrier legs at both ends of a profile roof.

Covers are arranged with locking cover elements on the support legs. According to the invention, each cover has a slot inside which a rocker is present, arranged with a therein to a horizontally oriented axis having pivotable rocker as a locking member, which is equipped with a group consisting of lock and lock bolt locking unit.

Another application is patent no. TR2016/17438 belonging to Tofa 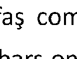 company. This application discloses a roof load carrier system comprising two roof bars on both sides of the vehicle, in the form of rods extending along the vehicle roof for carrying and/or attachment of loads, and at least one rack extending perpendicular from one roof bar to the other roof bar in the form of a rod. Document DE102016217111 A1 discloses a load carrier roof bar comprising a carrier bar and fixing group, wherein a foot holder is attached to the said fixing group rotatably along a vertical axis by means of vertical fixing element and a rotation axis gap which provides a bearing for the rotational motion of the said foot holder about the vertical axis.

### Description of the Invention

The object of the invention is to provide different technical features that bring a new insight in this field compared to the roof bars used in the state of the art.

A object of the invention is to provide a roof bar which is easy to manufacture and assemble due to its structure with low number of parts.

Another object of the invention is to minimize production and labor costs due to its structure with low number of parts and ease of assembly.

Another object of the invention is to complete the assembly process with a single bolt. Thereby, a durable fixing is quickly established.

Another object of the invention is to allow easy adaptability to the roof channels on the roof surface of the vehicle by means of a fixing jaw which is supported by a bearing on a single axis and rotating about a single axis.

In order to achieve the objects described above, a load carrier roof bar is defined by the features of claim 1.

### Brief Description of Drawings

Figure-1; is a perspective view of the roof bar of the invention.
Figure-2; is a close-up perspective view of the jaw section of the roof bar of the invention.
Figure-2.1; is a close-up top perspective view of the jaw section of the roof bar of the invention.
Figure-3; is a close-up exploded perspective view of the jaw section of the roof bar of the invention.
Figure-4; is a cross-sectional perspective view of the roof bar of the invention.

### Part Numbers

- 100: - Roof bar
- 200: -Fixing group
- 201: -Outer body
- 202: -Moving Jaw
- 203: -Fixed jaw
- 204: -Jaw holder
- 205: -Spacer
- 206: -Horizontal fixing element
- 206.1: Spring
- 207: -Vertical fixing element
- 208: -Locking element
- 209: -Rail channel
- 210: -Outer rail element
- 211: -Inner body
- 212: -Rotation axis gap
- 213: -Guiding extension
- 214: -Locking gap
- 215: -Bearing protrusion
- 216: -Angled surfaces
- 217: -Fixing clip
- 218: -Clamp screw
- 219: -Pressing element
- 300: -Carrier bar
- Z1: -Vertical axis
- Y1: -Horizontal axis

### Detailed Description Of The Invention

The invention is a load carrier roof bar (100) configured on vehicle roof surfaces to allow placing extended or unusually shaped items, whose volumetric structures do not comply with the trunk, comprising a carrier bar (300) and fixing group (200). The main feature of the said invention is that it comprises a jaw holder (204) which is fixed to the fixing group (200) by means of the vertical fixing element (207) rotatably about a the single vertical axis (Z1).

The moving jaw (202), which is fastened to the jaw holder (204) by means of horizontal fixing element (206) on a single horizontal axis (Y1), and the fixed jaw (203), comprise a spacer (205) that allows the said jaw holder (204) to be fixed to the inner body (211) and supported with a bearing while allowing it to perform rotational movement. On the other hand, it comprises a rotation axis gap (212) which provides a bearing for the rotational motion of the said jaw holder (204) by means of the spacer (205) about the vertical axis (Z1).Furthermore, it comprises a bearing protrusion (215) of the said rotation axis gap (212) and angled surfaces (216) that allow the said jaw holder (204) and the spacer (205) to interlock. Furthermore, preferably, the said jaw holder (204) and the spacer (205) have a monolithic structure. However, this system is produced in a modular structure. It includes a rail channel (209) in which the outer body (201) guiding extension (213) is inserted, and a fixing clip (217) in which the guiding extension (213) in this rail channel (209) is secured with a single move.

The mode of operation of the system is as follows; the roof bar (100) is fixed by means of a fixing group (200) to the connecting pole on the vehicle. The fixing group (200) comprises a moving jaw (202) and a fixed jaw (203). The moving jaw (202) is fixed in a way that it makes a rotating motion on one axis i.e. a Z1 axis. The inner body (211), spacer (205), jaw holder (204) and moving jaw (202) are centered on the Z1 axis and then fixed by means of vertical fixing element (207). However, before this fixing takes place, the jaw holder (204), which has a rotating motion with respect to the inclined surface on the vehicle, adjusts its position. This rotational motion granted to the jaw holder (204) provides the ability to adapt to all types of inclined surfaces. In addition, Y1 horizontal axis, the other horizontal fixing element(206) through the moving jaw (202) and fixed jaw (203) compressed roof connection element is provided. Thus, by means of the fixing group (200) and the jaws (202,203), the roof bar (100) is secured onto the vehicle.

The fixing group (200) of the invention establishes a high strength fixing using a single fastener. By means of a single fixing element (207) on a single axis along the Z1 axis, the outer body (201), the spacer (205), the jaw holder (204) and the moving jaw (202) and inner body (211) can be fastened. Afterwards, locking the outer body (201) by means of the locking gap (214) onto the locking element (208) and the outer rail element (210) is established.

In Figure-2, the horizontal fixing element (206) and spring (206.1) are clearly illustrated in addition to the moving jaw (202). The spring (206.1), which is centered with the horizontal fixing element (206), is positioned in this region and applies a continuous force in the a-direction to the moving jaw (202). With this force, it provides ease of assembly when fixing the roof bar (100) to the vehicle roof profile.

Figure-2.1 shows a close-up top perspective view of the jaw section of the roof bar (100). In this view, the clamp screw (218) and the pressing element (219) are illustrated. As a result of the application of rotation or tightening motion with a key to the clamp screw (218), the pressing element (219) with the raised surface applies thrust motion in this region and exerts pressure to the external carrier bar (300) from inside. By means of this pressing action and the raised surface, the carrier bar (300) is secured to the fixing group (200).

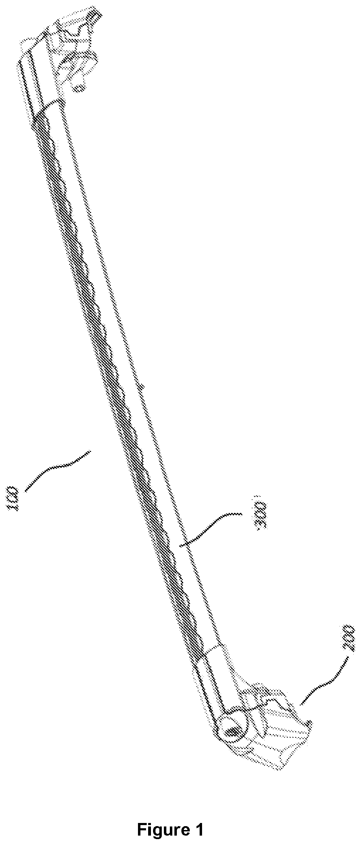

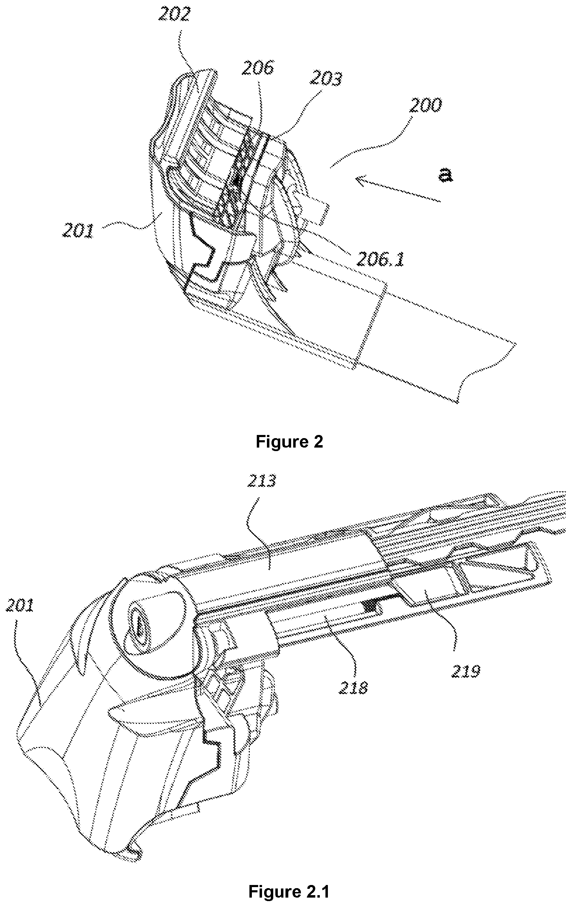

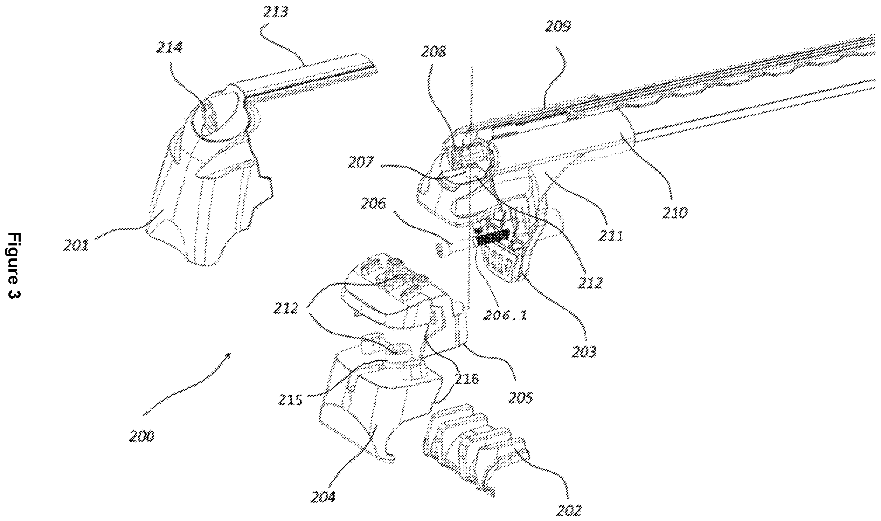

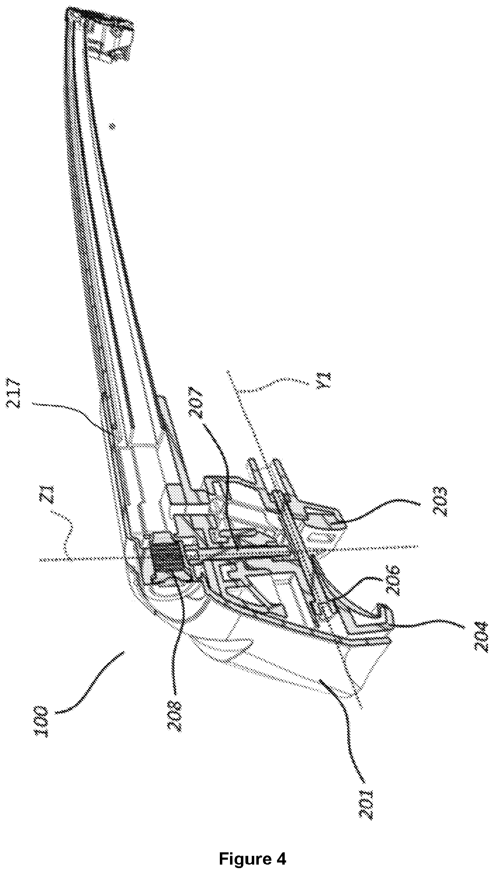

## Claims

1. A load carrier roof bar (100) configured on vehicle roof surfaces to allow placing extended or unusually shaped items, whose volumetric structures do not comply with the trunk, comprising a carrier bar (300) and fixing group (200), wherein; it comprises
- a jaw holder (204) attached to the said fixing group (200) rotatably along a vertical axis (Z1) by means of vertical fixing element (207),
- and a rotation axis gap (212) which provides a bearing for the rotational motion of the said jaw holder (204) about the vertical axis (Z1),
- wherein it comprises a moving jaw (202) and fixed jaw (203) fixed to the said jaw holder (204) along a single horizontal axis (Y1) by means of a horizontal fixing element (206),
- wherein it comprises a spring (206.1), which is centered with the said horizontal fixing element (206), applying a continuous force to the said moving jaw (202).

2. A carrier roof bar (100) according to claim 1, wherein; it comprises a spacer (205) which allows the mentioned jaw holder (204) to be fixed to the inner body (211) and supported by a bearing while allowing to perform rotational motion at the same time.

3. A carrier roof bar (100) according to claim 1, wherein; it comprises a rotation axis gap (212) which provides bearing for the rotational motion of the said jaw holder (204) together with the spacer (205), about the vertical axis (Z1).

4. A carrier roof bar (100) according to claim 1, wherein; the said rotation axis gap (212) contains a bearing protrusion (215).

5. A carrier roof bar (100) according to claim 1, wherein; it comprises angled surfaces (216) which allow the said the jaw holder (204) and the spacer (205) to interlock.

6. A carrier roof bar (100) according to claim 1, wherein; the said jaw holder (204) and the spacer (205) comprise a monolithic structure.

7. A carrier roof bar (100) according to claim 1, wherein; it comprises a rail channel (209) where the guiding extension (213) of the outer body (201) is placed, and a fixing clip (217) which ensures that the guiding extension (213) is secured in this rail channel (209) with one move.

8. A carrier roof bar (100) according to claim 1, wherein; it comprises
- at least one pressing element (219) positioned in the slot introduced on the inner body (211),
- and a clamp screw (218) which exerts thrust to this pressing element (219).

## Patentansprüche

1. Eine Lastträger-Dachstange (100), die auf Fahrzeugdachflächen konfiguriert ist, um das Platzieren verlängerter oder ungewöhnlich geformter Gegenstände zu ermöglichen, deren volumetrische Strukturen nicht mit dem Kofferraum übereinstimmen, umfassend eine Trägerstange (300) und eine Befestigungsgruppe (200), worin; sie umfasst
- einen Backenhalter (204), der an der Befestigungsgruppe (200) drehbar entlang einer vertikalen Achse (Z1) mittels eines vertikalen Befestigungselements (207) angebracht ist,
- und einen Rotationsachsenspalt (212), der ein Lager für die Drehung bereitstellt Bewegung des Backenhalters (204) um die vertikale Achse (Z1),
- wobei er eine bewegliche Backe (202) und eine feststehende Backe (203) umfasst, die an dem Backenhalter (204) entlang einer einzigen horizontalen Achse (Y1) befestigt sind mittels eines horizontalen Befestigungselements (206),
- wobei es eine Feder (206.1) umfasst, die mit dem horizontalen Befestigungselement (206) zentriert ist und eine kontinuierliche Kraft auf die bewegliche Backe (202) ausübt.

2. Dachträgerträger (100) nach Anspruch 1, wobei; sie umfasst einen Abstandshalter (205), der es ermöglicht, dass der erwähnte Backenhalter (204) an dem inneren Körper (211) befestigt und durch ein Lager getragen wird, während er gleichzeitig erlaubt, eine Drehbewegung auszuführen.

3. Dachträgerträger (100) nach Anspruch 1, wobei; es weist einen Rotationsachsenspalt (212) auf, der die Drehbewegung des Backenhalters (204) zusammen mit dem Abstandshalter (205) um die vertikale Achse (Z1) lagert.

4. Dachträgerträger (100) nach Anspruch 1, wobei; der Rotationsachsenspalt (212) einen Lagervorsprung (215) enthält.

5. Dachträgerträger (100) nach Anspruch 1, wobei; es weist abgewinkelte Flächen (216) auf, die ein Ineinandergreifen des Backenhalters (204) und des Abstandshalters (205) ermöglichen.

6. Dachträgerträger (100) nach Anspruch 1, wobei; der Backenhalter (204) und der Abstandshalter (205) eine monolithische Struktur umfassen.

7. Dachträgerträger (100) nach Anspruch 1, wobei er einen Schienenkanal (209), in dem die Führungsverlängerung (213) des Außenkörpers (201) angeordnet ist, und einen Befestigungsclip (217) umfasst, der die Führungsverlängerung (213) in diesem Schienenkanal (209) mit einer Aktion befestigt ist.

8. Dachträgerträger (100) nach Anspruch 1, wobei; es umfasst
- mindestens ein Druckelement (219), das in dem am inneren Körper (211) eingebrachten Schlitz positioniert ist,
- und eine Klemmschraube (218), die Druck auf dieses Druckelement (219) ausübt.

## Revendications

1. Une barre de toit porteuse pour charge (100) configurée sur des surfaces de toit de véhicule pour permettre de placer des objets allongés ou de forme inhabituelle, dont les structures volumétriques ne sont pas conformes au coffre, comprenant une barre de support (300) et un groupe de fixation (200), où; il comprend
- un porte-mors (204) fixé audit groupe de fixation (200) à rotation le long d'un axe vertical (Z1) au moyen d'un élément de fixation vertical (207),
- et un intervalle d'axe de rotation (212) qui fournit un palier pour la rotation mouvement dudit porte-mors (204) autour de l'axe vertical (Z1),
- dans quoi il comprend un mors mobile (202) et un mors fixe (203) solidaires dudit porte-mors (204) selon un même axe horizontal (Y1) par des moyens d'un élément de fixation horizontal (206),
- dans quoi il comprend un ressort (206.1), qui est centré avec ledit élément de fixation horizontal (206), appliquant une force continue sur ladite mors mobile (202).

2. Une barre de toit porteuse (100) selon la revendication 1, dans laquelle il comprend une entretoise (205) qui permet au porte-mors (204) mentionné d'être fixé au corps intérieur (211) et supporté par un palier tout en permettant d'effectuer un mouvement de rotation en même temps.

3. Une barre de toit porteuse (100) selon la revendication 1, dans laquelle il comprend un entrefer d'axe de rotation (212) qui sert d'appui pour le mouvement de rotation dudit porte-mors (204) avec l'entretoise (205), autour de l'axe vertical (Z1).

4. Une barre de toit porteuse (100) selon la revendication 1, dans laquelle ledit espace d'axe de rotation (212) contient une saillie de palier (215).

5. Une barre de toit porteuse (100) selon la revendication 1, dans laquelle il comprend des surfaces angulaires (216) qui permettent l'emboîtement dudit porte-mors (204) et de l'entretoise (205).

6. Une barre de toit porteuse (100) selon la revendication 1, dans laquelle ledit porte-mors (204) et l'entretoise (205) comprennent une structure monolithique.

7. Une barre de toit porteuse (100) selon la revendication 1, dans laquelle ; il comprend un canal de rail (209) où est placé le prolongement de guidage (213) du corps extérieur (201), et un clip de fixation (217) qui assure la fixation du prolongement de guidage (213) dans ce canal de rail (209) d'un seul geste.

8. Une barre de toit porteuse (100) selon la revendication 1, dans laquelle ; il comprend
- au moins un élément presseur (219) positionné dans la fente pratiquée sur le corps intérieur (211),
- et une vis de serrage (218) qui exerce une poussée sur cet élément presseur (219).
